Europäisches Patentamt

European Patent Office

Office européen des brevets

(11) Publication number: **0 432 554 A1**

# EUROPEAN PATENT APPLICATION

(21) Application number: 90122512.8

(51) Int. Cl.⁵ **A01K 95/02**

(22) Date of filing: 26.11.90

(30) Priority: 12.12.89 IT 2265889

(43) Date of publication of application:
19.06.91 Bulletin 91/25

(84) Designated Contracting States:
**DE FR GB NL**

(71) Applicant: **FISH.ART. S.A.S. DI LAURA ZERBINI & C.**
**Via Di Vittorio, 30/b**
I-20097 San Donato Milanese, Milan(IT)

(72) Inventor: **Maroni, Mario**
**Via Di Vittorio, 30**
**I-20097 San Donato Milanese (Milan)(IT)**

(74) Representative: **Luksch, Giorgio, Dr.-Ing. et al**
**Ing. A. Giambrocono & C. S.r.l. Via Rosolino Pilo, 19/b**
**I-20129 Milano(IT)**

(54) **Device for fixing leads to the fishing line of a fishing rod.**

(57) A device for fixing leads to the fishing line of a fishing rod comprises an element (2) acting as a holder for containing a plurality of leads, this holder (2) being provided with at least one transfer duct (30) terminating in a fixing region (31) located in a position corresponding with clamping means (4) for associating the leads with the line, in said duct (30) there being provided mobile interception means (32) to enable the leads to be transferred to the clamping means (4) when desired, positioning means (43) being provided in correspondence with said fixing region to position the usual notch present in leads so that it corresponds with said line to enable them to be fixed together by pinching the leads about the line.

Fig. 1

EP 0 432 554 A1

## DEVICE FOR FIXING LEADS TO THE FISHING LINE OF A FISHING ROD

This invention relates to a device for fixing leads to the fishing line of a fishing rod.

To weight a line during fishing it is known to use leads. These are substantially of split-shot form, the line being positioned within the resultant cavity. Each lead is fixed by pinching it onto the line.

This operation requires much patience and often results in loss of a considerable number of leads and time wasting.

The operation is performed either manually or with pliers to pinch the leads onto the line, or with the teeth. This can result in imperfect fixing of the leads to the line, and if the operation is done with the teeth these may be damaged.

In addition if normal pliers are used to pinch the leads, the operation becomes very difficult because of the small size of the leads and their tendency to escape from the pliers while being pinched onto the line.

An object of the present invention is therefore to provide a device for automatically fixing leads onto the line of a fishing rod.

A further object is to allow this fixing to be achieved comfortably, easily, and without any loss of leads.

A further object is to provide a device of the aforesaid type which enables leads of different weight and size to be fixed according to requirements.

These and further objects which will be more apparent to the expert of the art are attained by a device for fixing leads to the fishing line of a fishing rod, characterised by comprising an element acting as a holder for containing a plurality of leads, this holder being provided with at least one transfer duct terminating in a fixing region located in a position corresponding with clamping means for associating the leads with the line, in said duct there being provided mobile interception means to enable the leads to pass to the clamping means when desired.

The present invention will be more apparent from the accompanying drawing which is provided by way of non-limiting example and in which:

Figure 1 is a sectional side view of a device according to the invention taken on the line I-I of Figure 2;

Figure 2 is a section on the line II-II of Figure 1;

Figure 3 is a section on the line III-III of Figure 1;

Figure 4 is a section on the line IV-IV of Figure 1; and

Figure 5 is a section on the line V-V of Figure 1.

With reference to said figures the device of the invention is indicated overall by 1 and comprises an element 2 acting as a holder for containing a plurality of known leads (not shown) to be fixed to the line of a fishing rod. Said element or holder 2 is secured by a support 3 to a gripper 4 comprising arms 5 and 6 and jaws 7 and 8, advantageously having their free ends 7A, 8A of V-shape.

The holder 2 is fixed by known means (such as screws 9 or by an insertion fit) to the support 3, this latter being associated with the gripper 4 by a screw 10 which also acts as the fulcrum for the jaws 7 and 8.

The support 3 comprises a central core 11 to which the screws 9 and 10 are fixed. Said core 11 also comprises seats 14 for receiving corresponding projections 15 on the holder 2, said projections being provided with holes 16 to receive the screws 9. This embodiment of the seats 14 and projections 15 enables the holder 2 to be easily mounted on the support 3. Alternatively, the connection between the holder 2 and the support 3 is made by an insertion fit between the core 11 of said support and suitable projections (for example of dovetail type, not shown) on said holder.

The body 18 of the holder 2 comprises a plurality of chambers 19 for containing leads of different sizes.

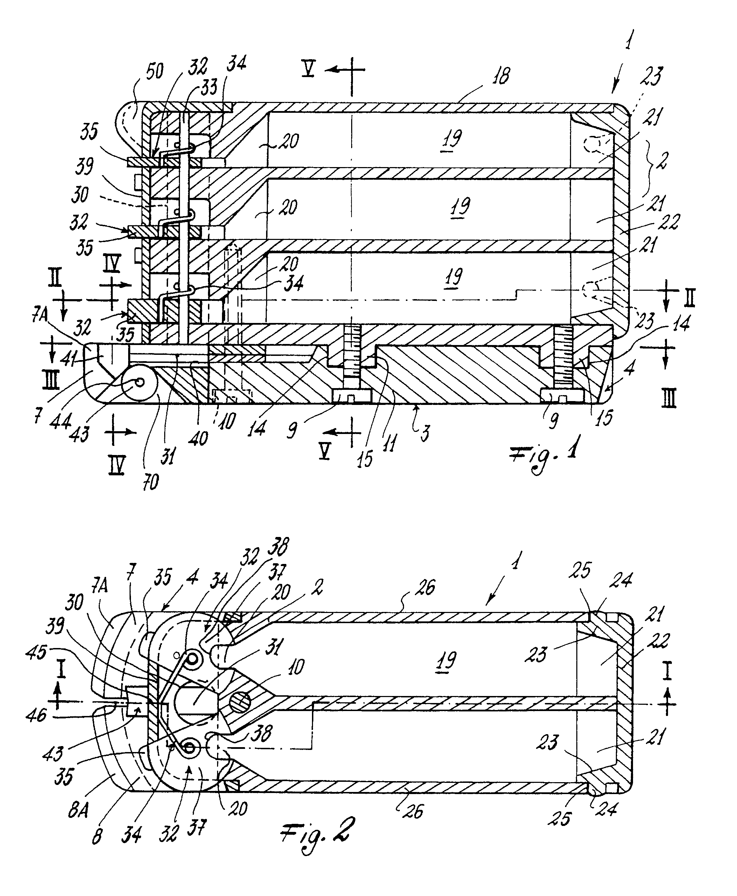

The chambers 19 each comprise an exit port 20 and an entry port 21. All the entry ports 21 are arranged at one end of the body 18 of the holder 2, to which an element 22 acting as a lid is snap-fitted (to the rear in Figure 1). This fitting is achieved by elastic deformation of lateral feet 23 of the rear element or lid 22, said feet 23 having a projection which as stated snap-cooperates with apertures 25 provided in the sides 26 of said body 18.

The exit ports 20 of the chambers 19 have different cross-sections to allow leads of different dimensions (and weight) to pass. In this manner several different types of leads can be accommodated in the holder 2, according to the particular situation and requirements.

Said ports 20 are able to be connected to a duct 30 to transfer the lead of the required size from the chambers 19 to a region 31 of the support 3 in which said leads are fixed to the line.

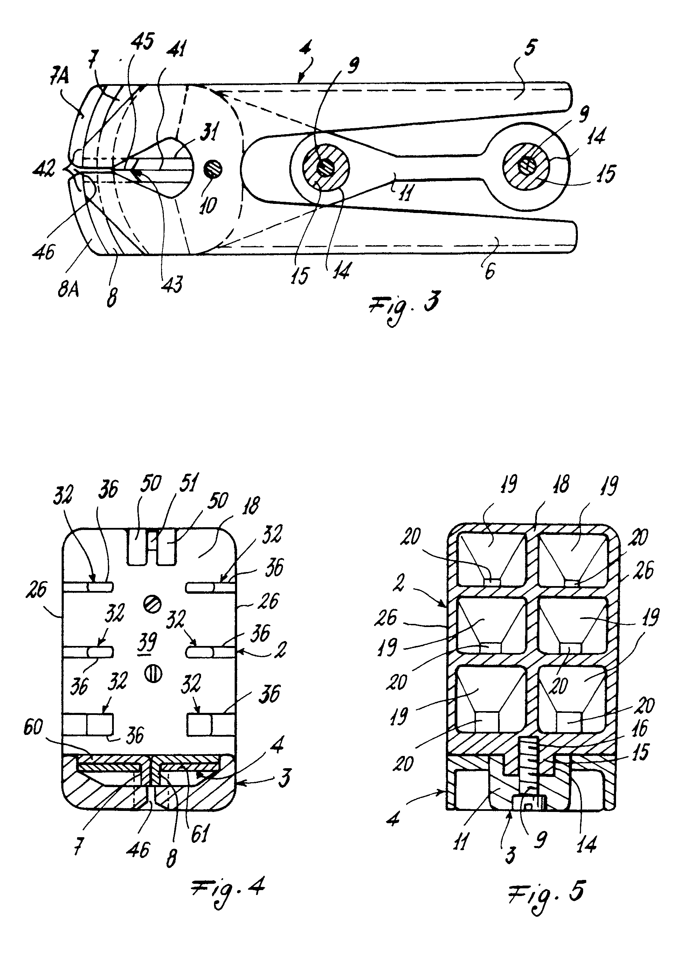

In this respect, in the embodiment shown in the figures, at each port 20 there is provided an interception member 32 rotatable about a pin 33 against the action of a spring 34. The member 32 has a part 35 projecting through a slot 36 (visible in Figure 4) in a closure element 39 secured in known manner to the body 18, and a part 37 provided with a recess 38.

When in the rest position (shown in the figures) the recess 38 of each interception member 32 lies in a position corresponding with a respective exit port 20 of a chamber 19. This recess is able to receive one of the leads present in said chamber and to convey it to said duct 30.

As stated the duct 30 (or transfer duct) of the holder 2 terminates in the fixing region 31 which corresponds with the jaws 7 and 8 of the gripper 4.

This region comprises a slightly inclined lower part which terminates in a seat 41 positioned to correspond with one end 42 of the gripper 4.

In a position corresponding with said seat, a roller element (or simply roller) 43 is associated with the support 3 by being inserted into a recess 70 in said support, to rotate about a pin 44.

The roller 43 comprises a sunken portion 45 coaxial to a recess 46 provided in the support 3.

Finally, the closure element 39 (to the front in Figure 1) comprises two projecting lugs 50 defining a recess 51 through which the line passes during the use of the described device.

It will now be assumed that said device is to be used to fix leads to a fishing line.

To do this the line is firstly inserted into the recesses 46 and 51 and held in position by pressing it against the holder 2.

One of the interception members 32 is then operated to transfer the lead of the required size into the fixing region 31.

In this respect, by moving the part 35 of the appropriate member 32 for the size of lead to be used, this member is rotated about the pin 33. In the example shown in the figures and described herein, said members are divided into two groups of three members, each group being disposed on one pin 33.

The rotation of the chosen member 32 against the action of the relative spring 34 causes one lead to move from that chamber 19 of the holder 2 corresponding to the chosen member, and into the duct 30.

Specifically, the lead penetrates into the recess 38 in said member 32, to be then dragged into the duct 30.

From this latter the lead falls into the fixing region 31, and from here it slides along the bottom 40 to enter the seat 41.

Here it is made to rotate about itself by operating the roller 43 so as to make the usual aperture in the lead correspond with the line.

Having done this the arms 5 and 6 of the gripper are operated to pinch the lead about the line and so fix it thereto.

The line is then extracted from the recesses 46 and 51 together with the relative lead.

It should be noted that two flat elements 60 and 61 are provided on the jaws 7 and 8 of the gripper 4 to act as limit stops for the opening of the gripper and at the same time to provide a support for the smallest leads, said elements preventing such leads from escaping from the gripper during their movement towards the seat 41.

A preferred embodiment of the invention has been described. Different embodiments can however be provided but without leaving the scope of the present invention.

One of such embodiments can comprise a holder 2 provided with a single chamber 19, the exit duct 20 of which is intercepted by an element rotating about a pin positioned eccentrically to the transfer duct 30, which is coaxial to the duct 20.

A further embodiment can comprise a holder 2 provided with several chambers 19, the exit ducts of which terminate at a transfer duct 30 in which interception means slidable towards the outside of said holder are provided.

In this manner, on retracting these means a lead falls into the duct 30 by gravity.

Advantageously the holder 2 is constructed of any known transparent material. In this manner a user is able to see how many leads are still available for use and to replace or reload the vessel when this is nearly or completely empty.

It should be noted that refilling is easily achieved by removing the rear lid 22.

Finally, a known element can be associated with the arms 5 and 6 of the gripper 4 to close this latter and keep it closed when not in use.

The device of the invention enables leads to be easily, comfortably and effectively fixed to a fishing line.

In addition the device is of very small overall size (similar to a usual packet of cigarettes), enabling it to be easily transported, even in a pocket.

## Claims

1. A device for fixing leads to the fishing line of a fishing rod, characterised by comprising an element (2) acting as a holder for containing a plurality of leads, this holder (2) being provided with at least one transfer duct (30) terminating in a fixing region (31) located in a position corresponding with clamping means (4) for associating the leads with the line, in said duct (30) there being provided mobile interception means (32) to enable the leads to pass to the clamping means (4) when desired.

2. A device as claimed in claim 1, characterised in that the holder (2) comprises a body (18) in which a plurality of chambers (19) are provided to contain the leads, each chamber being provided with its own duct (20) connected to the transfer duct (30), a front closure element (39) and a rear closure element (22) being associated with said body (18).

3. A device as claimed in claim 2, characterised in that the body (18) of the holder (2) comprises projections (15) arranged to cooperate with seats (14) provided in a support element (3) with which the holder (2) is associated by known means (9, 10), clamping means (4) being associated with said support (3).

4. A device as claimed in claim 2, characterised in that the ducts (20) of the chambers (19) of the holder (2) have different cross-sections.

5. A device as claimed in claims 1 and 3, characterised in that the clamping means are a gripper (4) provided with usual jaws (7, 8) advantageously having their free ends (7A, 8A) of V shape.

6. A device as claimed in claims 1 and 2, characterised in that the mobile interception means are at least one member (32) rotating against the action of a spring (34) about a pin (33) disposed within said holder (2), said member (32) having a part (35) projecting through a slot (36) provided in the front closure element (39) of the holder, said part (35) enabling said member (32) to be operated to allow leads to pass into the transfer duct (30).

7. A device as claimed in claim 6, characterised in that each member (32) acting as the transfer means has a part (37) provided with a recess (38) which when said member (32) is in its rest position lies in a position corresponding with a duct (20) of a chamber (19) of said holder (2).

8. A device as claimed in claims 1 and 3, characterised in that the fixing region (31) is provided in the support (3) with which the clamping means (4) and the holder (2) are associated, said region having an inclined bottom (40) terminating in a seat (41) in which the leads are positioned during their fixing to the line.

9. A device as claimed in claim 8, characterised in that in correspondence with the seat (41) in the region (31) in which the leads are fixed there are provided positioning means (43) for said leads, said means comprising in a recess (70) in said support (3) at least one element for rotating the lead present in said seat (41).

10. A device as claimed in claims 3 and 9, characterised in that the support (3) comprises a recess (46) terminating in the recess (70) containing the positioning means (43), said recess (46) being arranged to accommodate the line during the fixing of the leads.

11. A device as claimed in claim 1, characterised in that the holder comprises two projecting lugs (50) defining a recess (51) within which the line is positioned during the fixing of the leads.

12. A device as claimed in claim 5, characterised in that the gripper (4) comprises, associated with its usual jaws (5, 6), two elements (60, 61) acting as limit stops for the opening of said gripper (4) and also acting as a retainer for the leads of smallest dimensions.

*Fig. 1*

*Fig. 2*

Fig. 3

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A-3 410 23  (JACCARD) <br> * the whole document * <br> – – – | 1,2,4,5 | A 01 <br> K 95/02 |
| X | US-A-2 655 062  (MEATTE) <br> * the whole document * <br> – – – | 1 | |
| X | US-A-3 070 815  (MARR) <br> * the whole document * <br> – – – | 1 | |
| A | FR-E-8 113 6  (MEZA) <br> – – – | | |
| A | US-A-2 723 403  (MILLER) <br> – – – – – | | |

TECHNICAL FIELDS
SEARCHED (Int. Cl.5)

A 01 K

The present search report has been drawn up for all claims

| Place of search | Date of completion of search | Examiner |
|---|---|---|
| The Hague | 12 March 91 | VERDOODT S.J.M. |